**Europäisches Patentamt**

**European Patent Office**

**Office européen des brevets**

(11) Veröffentlichungsnummer: **0 287 507**
A2

# (12) EUROPÄISCHE PATENTANMELDUNG

(21) Anmeldenummer: **88810165.6**

(22) Anmeldetag: **16.03.88**

(51) Int. Cl.⁴: **F 16 B 4/00**
**F 21 V 17/00, F 21 V 31/00**

(30) Priorität: **16.03.87 CH 976/87**

(43) Veröffentlichungstag der Anmeldung:
**19.10.88 Patentblatt 88/42**

(84) Benannte Vertragsstaaten:
**AT BE DE FR IT NL SE**

(71) Anmelder: **META-FER AG**
**Fabrikstrasse 10**
**CH-9470 Buchs (CH)**

(72) Erfinder: **Vadseth, Jan E.**
**Joachimsbüel**
**CH-9475 Sevelen (CH)**

(74) Vertreter: **Büchel, Kurt F., Dr.**
**Patentanwalt Dr. Kurt F. Büchel Bergstrasse 297**
**FL-9495 Triesen (LI)**

(54) **Verschlusssystem für zwei miteinander zu verbindende Behälterteile, Beleuchtungskörper aus zwei derart verbundenen Behälterteilen und Verfahren zum Verschliessen eines solchen Beleuchtungskörpers.**

(57) Die Erfindung betrifft ein Verschlusssystem für zwei miteinander zu verbindende Behälterteile, zum Beispiele für einen Beleuchtungskörper, das bzw. die schnell zu montieren ist, korrosionsunempfindlich ist, eine kontrollierbare Dichtheit ergibt, jederzeit schnell entfernbar und auch wieder anbringbar ist. Erfindungsgemäss ist die Oeffnungslinie (1) zwischen den Behälterteilen von einem Schrumpfschlauch (2) umhüllt und gegebenenfalls zusätzlich mit einer Schicht Dichtmasse (4), vorzugsweise einem Heissschmelzkleber, versehen.

Fig.1

EP 0 287 507 A2

## Beschreibung

### Verschlusssystem für zwei miteinander zu verbindende Behälterteile, Beleuchtungskörper aus zwei derart verbundenen Behälterteilen und Verfahren zum Verschliessen eines solchen Beleuchtungskörpers

Die Erfindung betrifft ein Verschlusssystem nach dem Oberbegriff des Anspruches 1, sowie einen Beleuchtungskörper aus zwei derart verbundenen Behälterteilen und Verfahren zum Verschliessen eines solchen Beleuchtungskörpers unter Verschlusssystem im Sinne der Erfindung ist das dichtende Verbinden zweier Behälterteile eines geschlossenen Behälters zu verstehen. Das traditionell häufigste Verbinden zweier Behälterteile zu einem geschlossenen Behälter ist das Verschweissen dieser Behälterteile miteinander.

Will man eine Verbindung, bzw. einen Verschluss öffnen und wieder schliessen können, versieht man z.B. die Ränder der Behälterteile entlang ihrer Oeffnungslinie mit Flanschen, die durch Schrauben miteinander verbunden werden. Als Dichtung werden dann häufig zwischen den Flanschen O-Ringe eingelegt. Die Herstellung einer derartigen Verbindung ist eine zeitaufwendige Arbeit, die insbesondere im Freien bei Wind und Wetter unangenehm ist. Durch korrosive Umwelteinfüsse kommt es häufig zu einer Beschädigung der Schraubverbindung, so dass sich diese schlecht lösen und/oder schlecht wieder verbinden lassen. Auch ist die Lage des O-Ringes in verschraubtem Zustand nicht immer kontrollierbar, wodurch dieser unter Umständen geringfügig eingezwickt ist und an Dichtfunktion verliert.

Um möglichst viele Schrauben zu sparen werden häufig nur an wenigen Stellen Schrauben vorgesehen, wodurch es beim festen Zusammenschrauben an diesen wenigen Stellen zu Verwerfungen und daher Undichtheiten der Behälterteile kommen kann.

Das Problem des zeitaufwendigen Verbindens, bzw. der Korrosionsschäden von Schraubverbindungen wird beispielsweise durch eine Lösung gemäss US-PS 4031382 vermieden, bei der bei einem Beleuchtungskörper eine Schnappverbindung vorgesehen ist, die über ein Kniehebelsystem, über Haken und Laschen den einen Behälterteil an den anderen zu binden vermag. Die übrigen erwähnten Probleme, insbesondere die Dichtheit, werden durch diese Lösung jedoch nicht beseitigt. Darüberhinaus ist das Anbringen der Haken und Laschen bei der Produktion der Behälter sehr zeitaufwending und daher kostspielig.

Die Erfindung stellt sich daher die Aufgabe, ein Verschlusssystem zu finden, das schnell zu montieren ist, korrosionsunempfindlich ist, eine kontrollierbare Dichtheit ergibt, jeder Zeit schnell entfernbar und auch wieder anbringbar ist. Diese Aufgabe wird durch das Merkmal des Anspruches 1 in zufriedenstellender Weise gelöst.

Durch den Schrumpfschlauch ist eine sichere zentrische (selbst zentrierende) Verbindung zwischen den beiden Behälterteilen gewährleistet. Insbesondere die Dichtheit des erfindungsgemässen Verschlusssystems ist hervorragend und optisch leicht inspizierbar, da man den Rand des Schrumpfschlauches jederzeit auf Oeffnungen oder Hohlräume überprüfen kann. Keinerlei Oeffnungen oder lose Stellen bedeuten automatisch einen dichten Verschluss. Schrumpfschläuche sind darüberhinaus in der Lage, auf Grund ihrer Haftreibung an den Behälterteilen auch axiale Kräfte in ausreichendem Mass zu übertragen.

Nun ist zwar das Verwenden von Schrumpfschläuchen in ganz anderen Zusammenhängen für die Verleindung zweier Teile schon bekannt geworden, wie beispielsweise der US-PS 2027962 und der EP-AS 0139483 entnommen werden kann.

In der US-PS 2027962 wird die Ummantelung eines Rohrstückes aus Metall mit einem Schrumpfschlauch beschrieben. Dabei geht es um die Oberflächenveränderung des betreffenden Rohrstükes. In der EP-AS ist ein elektrischer Steckanschluss beschrieben, dessen Kabeleinführung mit einem Schrumpfschlauch überzogen ist, um den Kabelanschluss in seinem Inneren vor Feuchtigkeit zu schützen, Beide Aufgaben, bzw. Lösungen konnten dem Fachmann auf der Suche nach einem Ersatz für die Schweiss- oder Flanschverbindung starrer, Witterungseinflüssen ausgesetzter Behälterteile keine Anregung bieten.

Die Merkmale der Unteransprüche beschreiben vorteilhafte Ausgestaltungen der Erfindung.

Eine zusätzliche Schicht Dichtmasse erhöht die Dichteigenschaften des Schrumpfschlauches, wobei ein Heissschmelzkleber sehr geeignet ist, da in einem Arbeitsgang der Kleber verflüssigt, der Behälter erwärmt und der Schrumpfschlauch aufgeschrumpft werden kann.

Für besonders hohe Festigkeitsansprüche an die beiden Behälterteile in axialer Richtung (im Sinne der Erfindung wird unter "axial" immer "im wesentlichen senkrecht zu der durch die Oeffnungslinie gebildeten Fläche" verstanden) sind die Ausgestaltungsmöglichkeiten nach Anspruch 3 vorgesehen, da der Schrumpfschlauch auch an dem kragenförmigen Vorsprung angreift und somit die beiden Behälterteile stärker aneinanderhält, als dies bei nur flachen Behälterteilen möglich wäre, wo alleine die Haftreibung des Schrumpfschlauches für die Verbindungskraft sorgt. Der kragenförmige Vorsprung kann dabei auch einander überlappende Elemente aufweisen, so dass beispielsweise der eine Vorsprung in den anderen eingesetzt werden kann, woraus sich auch eine zusätzliche zentrische Führung der beiden Behälterteile zueinander ergibt.

Bei der Variante nach Anspruch 4 übernimmt der Schrumpfschlauch praktisch nur mehr eine Dichtfunktion, sowie eine Schutzfunktion der Oeffnungslinie, bzw. der dort vorgesehenen Elemente (Schraubgewinde, Knaggen usw.) gegenüber dem Umfeld, wodurch ein hervorragender Korrosionsschutz gewährleistet ist.

Die Merkmale des Anspruches 5 erhöhen einerseits die Haftreibung des Schrumpfschlauches in Axialrichtung und andererseits die Dichtfunktion desselben, da an den Kanten der Rippen, bzw. Rillen Zonen erhöhter Anpressung auftreten.

Als Schrumpfschlauch können verschiedenartigste Materialen vorgesehen werden, wobei in den häufigsten Fällen Elastomere, wie Gummi usw. zur Anwendung kommen. Jedoch sind eine Vielzahl unterschiedlichster Kunststoffe bekannt, die Schrumpfeigenschaften aufweisen, wobei unter Schrumpfen im Sinne der Erfindung nicht ausschliesslich nur das thermische Schrumpfen zu verstehen ist.

Durch die Merkmale des Anspruches 6 ist eine weitere Verbesserung des Verschlusssystemes, bzw. eine bessere Haftung des Schrumpfschlauches auf jenen Behälterteilen gegeben, die über Rillen oder Rippen, bzw. kragenförmige oder sonstige Vorsprünge verfügen. Bei diesen wird durch die Verbindung mit einem auch längsschrumpfenden Schrumpfschlauch die Kraftübertragung in axialer Richtung erhöht, bzw. werden die Behälterwandungen fest aneinander gepresst.

Bei einem Versuchsbeispiel hat es sich z.B. gezeigt, dass in einem Behälter von etwa 20 cm Durchmesser, bestehend aus zwei Behälterteilen, die entlang ihrer Oeffnungslinie einen Kragen von etwa 4 mm aufwiesen, ein Innendruck von mehr als 5 atü erzeugt werden kann, ohne dass die beiden Behälterteile auseinanderrücken, bzw. ohne dass der Behälter undicht wird. Der Schrumpfschlauch in dieser Anordnung hat eine Breite von etwa 9 cm und eine Dicke von ca. 4 mm und bestand aus einem vorgedehnten wärmeschrumpfbaren Gummimaterial.

Ein besonderes Anwendungsgebiet für ein erfindungsgemässes Verschlusssystem ist die Beleuchtungstechnik im Freien, da Beleuchtungskörper, die im Freien untergebracht sind bislang nur unter sehr schwierigen und aufwendigen Bedingungen dicht verschlossen werden konnten.

Ist das dichte Verschliessen eines derartigen Beleuchtungskörpers nicht möglich, so können folgende Nachteile auftreten:

Kondenswasserbildung an den Lichtaustrittsöffnungen (bewirkt Lichtaustrittsminderung); Kondenswasserbildung an elektrischen Anschlussteilen (führt zu Leckstromverlusten, Korrosion, Kurzschluss, Ausfall des Beleuchtungskörpers); Kondenswasserbildung in Fugen und Ritzen des Beleuchtungskörpers (führt bei Temperaturen unter Null Grad zu einer Gefrieraufsprengung und Zerstörung des Beleuchtungskörpers); eindringender Staub (verringert die Lichtausbeute) usw.

Durch die dichtende Ausbildung des Verschlusssystemes ist es nun möglich und erfindungsgemäss vorgesehen, den Gasdruck im Inneren des Behälters zu reduzieren, wodurch dieser bei starker Erwärmung und dadurch Dampfdrucksteigerung im Inneren die gesamte Konstruktion des Beleuchtungskörpers nicht zu sehr belastet. Umgekehrt bewirkt ein Unterdruck im Inneren des Beleuchtungskörpers gewissermassen das Ansaugen des Schrumpfschlauches an die Oeffnungslinie, wodurch eine bessere Dichtheit gegeben ist. Ist zudem noch die Feuchtigkeit reduziert, wird auch eine Kondenswasserbildung bis zu Temperaturen unter Null Grad angehalten.

Die Trockenheit im Inneren des Beleuchtungskörpers wird nach dem Kennzeichen des Anspruches 7 noch verbessert, wobei eine Sichtbarkeit der hygrophilen Substanz eine Indikation über den Dichtheitszustand des Beleuchtungskörpers zulässt. Hygrophile Substanzen sind üblicherweise Salze oder Silikagel, das sich nach Aufnahme von Feuchtigkeit verfärbt. Tritt also eine Verfärbung auf, die beispielsweise durch einen Blick in die Lichtaustrittsöffnung oder eine andere dafür vorgesehene Oeffnung registriert werden kann, so kann davon ausgegangen werden, dass der Behälter des Beleuchtungskörpers undicht geworden ist und Wasser eingedrungen ist. Für spezielle Anwendungsfälle könnte sogar ein eigenes Schauglas vorgesehen werden, um diese Inspektion zu ermöglichen.

Das im Anspruch 9 gekennzeichnete Verfahren zum Verschliessen eines Beleuchtungskörpers stellt sicher, dass im Inneren des Beleuchtungskörpers einerseits der Druck gegenüber dem Aussendruck reduziert und anderseits dass die Feuchtigkeit aus dem Beleuchtungskörper entwichen ist; dabei kann auch die Montage eines zerlegten Beleuchtungskörpers sehr rasch und sicher vonstatten gehen. Das Erwärmen eines Beleuchtungskörpers kann dabei beispielsweise derart erfolgen, dass der Beleuchtungskörper auf einer rotierbaren Drehscheibe aufgesetzt wird, und von einer Seite mit einem stationären Gasbrenner od.dgl. beflammt wird. Durch das Drehen des Beleuchtungskörpers auf der Drehscheibe erwärmt sich dieser gleichmässig. Im Anschluss daran kann sehr einfach der Schrumpfschlauch mit dem schon aufgeschichteten Heisschmelzkleber übergesteckt werden. Das nochmalige Drehen und Beflammen stellt eine optimale symmetrische Schrumpfung des Schrumpfschlauches und damit einen hervorragenden dichten Verschluss im Sinne der Erfindung sicher.

An Hand der Zeichnung wird die Erfindung beispielhaft näher erläutert.

Es zeigen dabei die

Fig. 1 bis 4 einfache bombenförmige Behälter mit jeweils unterschiedlicher Oeffnungslinie;

Fig. 5 einen strukrierten Schrumpfschlauch und die

Fig. 6 einen Beleuchtungskörper kurz vor dessen Zusammenbau.

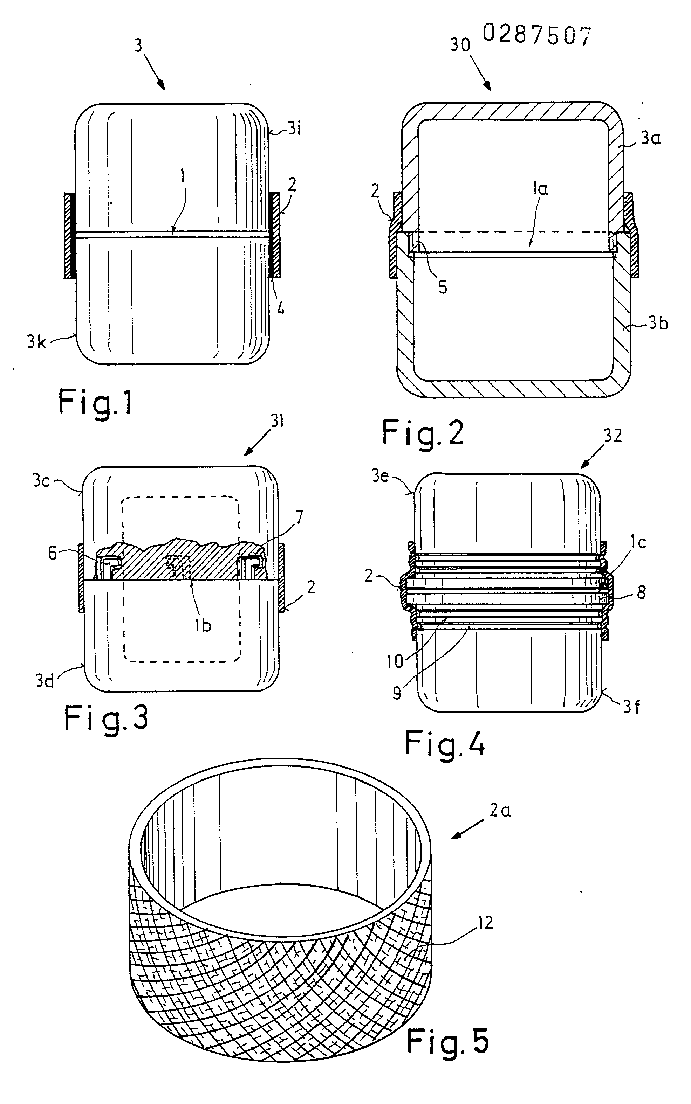

In der Fig. 1 ist ein starrer geschlossener Behälter 3 aus zwei starren Behälterteilen 3i und 3k aufgebaut. Die beiden Behälterteile 3i und 3k sind entlang einer Oeffnungslinie 1 aneinander gesetzt und mittels Schrumpfschlauch 2, der die Oeffnungslinie 1 umhüllt, festhaftend miteinander verbunden, bzw. dichtend gehalten. Zwischen dem Behälter 3, bzw. seiner Oeffnungslinie 1 und dem Schrumpfschlauch 2 ist eine Dichtmasse 4 aus Heisschmelzkleber, Silikongummi oder ähnlichem aufgebracht.

Der Behälter 3 könnte beispielsweise für das Aufbewahren von Gegenständen - unter Ausschluss von schädlicher Feuchtigkeit für diese Gegenstände - vorgesehen sein.

In der Fig. 2 ist ein ähnlicher Behälter 30 dargestellt, der allerdings zusätzlich zu der Verbindung mittels Schrumpfschlauch 2 an einer Oeffnungslinie 1a durch ein Gewinde 5 an den beiden Behälterteilen 3a und 3b verschraubt ist. Der Behälterteil 3b trägt dabei ein Innengewinde, das auf ein Aussengewinde des Behälterteiles 3a aufschraubbar ist. Anstelle dieser beispielhaften Ausgestaltung könnten beispielsweise auch die Teile 3a und 3b mit je einem Aussengewinde mit gleichem Durchmesser versehen sein, welche Aussengewinde mit einer Mutter verschraubt sein könnten.

In Fig. 3 ist ein ähnlicher Behälter 31 ersichtlich, dessen Behälterteile 3c und 3d ebenso an einer Oeffnungslinie 1b zusammengesetzt sind, wobei der Behälterteil 3d bajonettartige Knaggen 6 aufweist, die in gegegleiche Schliessöffnungen 7 im Behälterteil 3c eingesetzt sind. Der Schrumpfschlauch umhüllt auch in diesem Fall die Oeffnungslinie 1b. Diese Ausgestaltung ermöglicht ein sehr schnelles Zusammenstecken der Behälterteile 3c und 3d, wobei auch grosse Kräfte in axialer Richtung aufgenommen werden könnten, ohne die beiden Behälterteile 3c und 3d zu trennen.

In der Fig.4 ist ein weiterer Behälter 32 dargestellt, der aus zwei Behälterteilen 3e und 3f aufgebaut ist, die an einer Oeffnungslinie 1c aneinandergesetzt sind. Die Behälterteile 3e und 3f haben an der Oeffnungslinie 1c einen kragenartigen Vorsprung 8, und daran anschliessend in Umfangsrichtung orientierte Rillen 9 und Rippen 10. Der Schrumpfschlauch 2 überdeckt den gesamten Bereich der Rillen 9, Rippen 10, Vorsprünge 8 und Oeffnungslinie 1c. Die Vorsprünge 8 ermöglichen eine gute Kraftübertragung der Schrumpfkräfte auch in axiale Richtung des Behälters 32. Die Dichtheit wird durch die Rillen 9 und Rippen 10 noch zusätzlich verstärkt, wobei auch durch diese Rippen und Rillen verstärkte Axialkräfte übertragen werden können.

In der Fig. 5 ist ein ringförmiger Schrumpfschlauch 2a dargestellt, der Strukturelemente 12 aufweist. Diese Strukturelemente 12 sind nur schematisch dargestellt und können beispielsweise geflochtene Fäden sein, die insbesonder in ihrer Längserstrekkung Schrumpfkräfte aufzubringen vermögen. Die Strukturelemente 12 können allerdings auch Kabel od.dgl. oder aber auch nur Molekülstrukturen darstellen. In der Fig. 5 sind diese Strukturelemente etwa schräg zur Axialerstreckung des Schrumpfringes 2a angeordnet. Dadurch schrumpft der Schrumpfring 2a sowohl in radialer als auch in axialer Richtung. Dies ist beispielsweise für die Verbindung eines Behälter 32 nach Fig. 4 optimal.

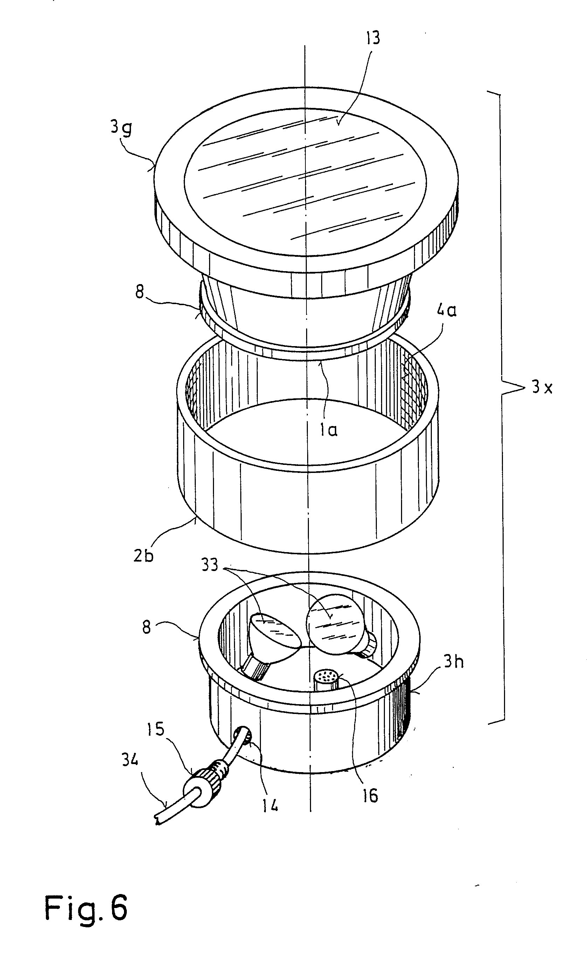

In der Fig. 6 ist ein Behälter 3x in noch nicht montiertem Zustand dargestellt, der im wesentlichen aus einem Behälter teil 3g und einem Behälterteil 3h besteht. In dem Behälterteil 3h sind zwei Lampen 33 angeordnet. Der Behälterteil 3g ist zu seiner Oeffnungslinie 1a hin konisch verjüngt. Entlang der Oeffnungslinie 1a verfügt der Behälterteil 3g einen kragenartigen Vorsprung 8, der mit einem gegengleichen Vorsprung 8 auf dem Behälterteil 3h in Eingriff bringbar ist. Die Verbindung zwischen dem Behälterteil 3g und dem Behälterteil 3h erfolgt mittels Schrumpfschlauch 2b, der an seiner Innenseite mit einem Heissschmelzkleber 4a beschichtet ist. Der Behälterteil 3g verfügt an seinem oberen Ende über eine Lichtaustrittsöffnung 13, durch die das Licht der Lampen 33 ins Freie dringen kann. Die Lichtaustrittsöffnung ist mit einer durchscheinenden oder durchsichtigen, nicht dargestellten Abdeckung aus Glas oder Kunststoff abgedeckt. Ein derartiger Beleuchtungskörper, bzw. Behälter 3x kann sowohl für Strassenbeleuchtungen, Schwimmbeckenbeleuchtungen oder aber Flugfeldbeleuchtungen usw. eingesetzt werden und zeichnet sich durch hervorragende Dichtheit und schnelle Montagemöglichkeit aus. Die Stromversorgung erfolgt über ein Kabel 34 und eine Kabeldurchführung 15, die als Schraubknebel ausgeführt ist und in eine Oeffnung 14 des Behälterteiles 3h dichtend einschraubbar ist. In seinem Inneren hat der Behälterteil 3h auch eine stark hygrophile Substanz 16 untergebracht. Zum einen wird dadurch die Luft im Inneren des Behälters 3x trocken gehalten, zum anderen kann man durch die Lichtaustrittsöffnung 13 die hygrophile Substanz optisch inspizieren und feststellen, ob sie in Folge Feuchtigkeitseinwirkung verfärbt ist oder nicht. Eine stark verfärbte hygrophile Substanz 16 würde darauf hin deuten, dass das Verschlusssystem undicht geworden ist.

Durch die dargestellten Figuren ist die Erfindung keinesfalls eingeschränkt. Ein erfindungsgemässes Verschlusssystem ist auch in sehr einfacher Art und Weise bei eckigen oder anders geformten Behältern, bzw. Behälterteilen vorsehbar.

Auch wäre es denkbar, einen zusätzlichen O-Ring als Dichtung an der Stirnseite der Oeffnungslinie vorzusehen und/oder die Wände der Behälterteile einander überlappend auszugestalten.

Bezugszeichenliste: Oeffnungslinie 1,
Schrumpfschlauch 2,
Behälter 3 (Teile a,b,c...)
Dichtmasse 4,
Schraubgewinde 5,
Knaggen 6,
Schliessöffnungen 7,
Vorsprung 8,
Rillen 9,
Rippen 10,
Strukturelemente 12,
Lichtaustrittsöffnung 13,
Oeffnung 14,
Kabeldurchführung 15,
hygrophile Substanz 16,
Behälter 30-32

## Patentansprüche

1. Verschlusssystem für zwei miteinander zu verbindende Behälterteile eines starren, geschlossenen Behälters entlang einer Oeffnungslinie durch diesen Behälter, dadurch gekennzeichnet, dass die Oeffnungslinie (1) von einem Schrumpfschlauch (2) umhüllt ist.

2. Verschlusssystem nach Anspruch 1, dadurch gekennzeichnet, dass zwischen dem Behälter (3) und dem Schrumpfschlauch (2) eine Schicht Dichtmasse (4), vorzugsweise ein Heissschmelzkleber, angeordnet ist. (Fig. 1)

3. Verschlusssystem nach Anspruch 1 oder 2, dadurch gekennzeichnet, dass entlang der Oeffnungslinie (1c) auf wenigstens einem Behälterteil (3e;3f) zumindest je ein kragenartiger Vorsprung (8), vorzugsweise in geschlossener Ringform, vorgesehen ist. (Fig. 4)

4. Verschlusssystem nach einem der vorhergehenden Ansprüche, dadurch gekennzeichnet, dass die Behälterteile (3a,3b;3c,3d) an der Oeffnungslinie (1a;1b) durch ein Schraubgewinde (5) oder durch mindestens je drei bajonettartige Knaggen (6) und Schliessöffnungen (7) miteinander verbindbar sind. (Fig.2,3)

5. Verschlusssystem nach einem der vorhergehenden Ansprüche, dadurch gekennzeichnet, dass an der Oberfläche wenigstens eines Behälterteiles (3e,3f) im Bereich neben der Oeffnungslinie (1c) - vz parallel zu ihr verlaufende - Rillen (9) und/oder Rippen (10) ausgebildet sind. (Fig. 4)

6. Verschlusssystem nach einem der vorhergehenden Ansprüche, dadurch gekennzeichnet, dass der Schrumpfschlauch (2a) längsschrumpfende Strukturelemente (12) aufweist, die zumindest teilweise in axialer Richtung des Schrumpfschlauches (2a) oder schräg dazu angeordnet sind. (Fig. 5)

7. Beleuchtungskörper mit einer glasartigen Lichtaustrittsöffnung (13) und zwei miteinander zu verbindenden, einen geschlossenen starren Behälter (3x) bildenden Behälterteilen (3g,3h) nach einem der vorhergehenden Ansprüche, dadurch gekennzeichnet, dass der Gasdruck im Inneren des Behälters (3x) im Bereitschaftszustande des Beleuchtungskörpers gegenüber dem atmosphärischen Aussendruck reduziert ist, und dass vorzugsweise die relative Luftfeuchtigkeit im Inneren des Behälters (3x) bei Zimmertemperatur weniger als 1% beträgt. (Fig. 6)

8. Beleuchtungskörper nach Anspruch 7, dadurch gekennzeichnet, dass in seinem Inneren - vorzugsweise sichtbar - eine stark hygrophile Substanz (16) untergebracht ist. (Fig. 6)

9. Verfahren zum Verschliessen eines für die Aussenmontage vorgesehenen Beleuchtungskörpers nach Anspruch 7 oder 8, dadurch gekennzeichnet, dass die Behälterteile (3g,3h) entlang der Oeffnungslinie (1a) zusammengesetzt werden, während eine Oeffnung (14), beispielsweise jene für eine Kabeldurchführung (15), offen ist, worauf der Behälter (3x) auf mindestens 50, vorzugsweise auf 60 - 70 Grad Celsius erwärmt und im Bereich der Oeffnungslinie mit einem wärmeschrumpffähigen, vorzugsweise an seiner Innenseite mit einem Heissschmelzkleber (4a) beschichteten, Schrumpfschlauch (2b) umhüllt wird, der anschliessend rundum auf seine Schrumpftemperatur erwärmt wird, und dass anschliessend die Oeffnung (14), beispielsweise durch Montage der Kabeldurchführung (15), dicht verschlossen.

0287507

Fig.1
Fig.2
Fig.3
Fig.4
Fig.5

Fig. 6